Europäisches Patentamt

European Patent Office

Office européen des brevets

(19)

(11) Veröffentlichungsnummer : **0 433 675 B1**

## (12)       EUROPÄISCHE PATENTSCHRIFT

(45) Veröffentlichungstag der Patentschrift :
21.09.94 Patentblatt 94/38

(51) Int. Cl.$^5$ : **G01S 13/44**

(21) Anmeldenummer : **90122009.5**

(22) Anmeldetag : **17.11.90**

(54) **Verfahren zur Korrektur von Fehlern in einem nach dem Crossfeed-Prinzip arbeitenden Radargerät.**

(30) Priorität : **22.12.89 CH 4606/89**

(43) Veröffentlichungstag der Anmeldung :
**26.06.91 Patentblatt 91/26**

(45) Bekanntmachung des Hinweises auf die
Patenterteilung :
**21.09.94 Patentblatt 94/38**

(84) Benannte Vertragsstaaten :
**CH DE IT LI NL**

(56) Entgegenhaltungen :
**FR-A- 2 312 037**
**RADAR 87,19. Oktober 1987, London,GB;Sei-**
**ten 428 - 432; SCHENKEL: 'CROSSFEED MO-**
**NOPULSE-A SPECIFIC METHOD TO**
**ELIMINATE ELEVATION MISTRACKING OVER**
**SEA'**

(56) Entgegenhaltungen :
**1983 ULTRASONICS SYMPOSIUM PROCEE-**
**DINGS, Bd. 1, 31. Oktober 1983, Atlanta, GE,**
**US; Seiten 165-169; NYFFELER et al: 'AP-**
**PLICATION OF SAW DEVICES FOR COMBI-**
**NED FILTERING/MULTIPLEXING AND**
**RANGING IN A NOVEL CIWS IF SIGNAL PRO-**
**CESSOR'**
**IEEE TRANSACTIONS ON AEROSPACE AND**
**ELECTRONIC SYSTEMS. Bd. AES14, Nr. 1,Ja-**
**nuar 1978, New York,US;Seiten 85 - 101;**
**MRSTIK: 'Multipath limitations on low angle**
**radar tracking'**

(73) Patentinhaber : **SIEMENS-ALBIS**
**AKTIENGESELLSCHAFT**
**PV/Patente und Verträge**
**Postfach**
**CH-8047 Zürich (CH)**

(72) Erfinder : **Schenkel, Albert, Dr.**
**Wunderlistrasse 47**
**CH-8037 Zürich (CH)**

## Beschreibung

Die vorliegende Erfindung betrifft ein Verfahren nach dem Oberbegriff des Patentanspruchs 1.

Zur Verfolgung von Flugobjekten werden heute normalerweise Monopuls-Folgeradargeräte eingesetzt. Mit diesem Gerät werden hierfür in Azimut und Elevation Winkelfehlersignale erzeugt, die im freien Raum zu Null werden, wenn die Antennen- bzw. Boresight-Achse genau auf das Ziel ausgerichtet ist. Die Nachführung der Antenne zur Zielverfolgung erfolgt über zwei Servokreise, nämlich einen für die Elevation- und einen für die Azimuteinstellung. Solche Radargeräte sind an sich bekannt.

Werden mit einem solchen Radargerät Ziele in einem Bereich verfolgt, in dem die Echosignale beispielsweise an einer Wasseroberfläche in Richtung zur Antenne gespiegelt werden, tritt ein Elevationswinkelfehlersignal auf, das auch dann nicht null ist, wenn die Antennenachse genau auf das Ziel ausgerichtet ist. Neben dem Echosignal des eigentlich zu verfolgenden Ziels wird ein zweites an der Wasseroberfläche gespiegeltes Zielecho empfangen, das vom erstgenannten weder in der Distanz noch im Winkel aufgelöst werden kann. Die Überlagerung dieser zwei Echosignale ergibt folglich falsche Angaben bezüglich der Elevation des Zielobjekts. Das hat zur Folge, dass der Elevationsservokreis während der Nachführphase die Antennenachse vom Ziel wegführt.

Zur Überwindung dieser Schwierigkeit werden deshalb bei der sogenannten Crossfeed-Methode weitere Winkelfehlersignale verwendet, die bei richtiger Kombination auch im Spiegelungsfall eine Signalnullstelle auf der Antennenachse erzeugen. Diese Methode ist in den schweizerischen Patentschriften Nr. 592 887 und 629 898 ausführlich beschrieben. Eine Monopulsantenne mit z.B. vier Antennenhörnern a, b, c, d empfängt dabei das aus direktem und gespiegeltem Echosignal bestehende Interferenzsignal. In bekannter Weise können in einem der Antenne nachgeschalteten Summen- Differenz-/Netzwerk aus den durch die Antennenhörner a, b, c, d empfangenen Echosignalen folgende Nutzsignale gewonnen werden, die von der Ausrichtung der Antenne in Bezug auf die spiegelnde Fläche abhängig sind :

Eine die Distanzinformation enthaltende Summenfunktion

$$F_S = a + b + c + d,$$

eine die Seitenwinkel- bzw. Azimutinformation enthaltende erste Differenzfunktion

$$F_{dA} = d - b,$$

eine durch Spiegeleffekte verfälschte, die Höhenwinkel- bzw. Elevationsinformation und die Spiegeleffektin-formation enthaltende zweite Differenzfunktion

$$F_{dE} = a - c$$

sowie eine beide Winkelinformationen und die Spiegeleffektinformation enthaltende Cross- bzw. Kreuzterm-funktion

$$F_{dK} = (a + c) - (b + d).$$

In einem dem Summen-Differenz-Netzwerk nachgeschalteten Diskriminator werden mit Referenz zur Summenfunktion $F_S$ die Winkelfehlerfunktionen

des Seitenwinkels

$$F_A = F_{dA} / F_S$$

des Höhenwinkels

$$F_E = F_{dE} / F_S$$

sowie des Kreuzterms

$$F_K = F_{dK} / F_S$$

systemgemäss aufbereitet. In Quadraturkanälen, die dem Diskriminator nachgeschaltet sind, werden folgende Signale gewonnen :

Die Inphaseanteile EAP, EEP, EKP der Winkelfehlerfunktionen $F_A$, $F_E$ und $F_K$ sowie die dementsprechend um 90 Grad verschobenen Quadraturanteile EEQ und EKQ der Winkelfehlerfunktionen $F_E$ und $F_K$. Für sämtliche Winkelfehlersignale gilt die Summenfunktion $F_S$ bzw. ein dazu korrespondierendes Signal als Referenz. Das korrigierte Höhenwinkelfehlersignal $F_{Ekorr}$ ergibt sich nun in Abhängigkeit des Winkels zwischen Ziel und Antennenachse $w_{dE}$ aus folgender Funktion :

$$F_{Ekorr}(w_{dE}) = EEP - (EEQ/EKQ) \times EKP + (EEQ/EKQ) \times F_K(w_{dE}) \text{ bzw. } F_{Ekorr}(w_{dE}) = EEP + FD1 + FD2$$

Das Restkorrekturglied FD2 ist im Gegensatz zum Korrekturglied FD1 selbst eine Funktion des Winkels $w_{dE}$ und wird iterativ bestimmt oder vernachlässigt. Die Fehlerkorrektur nach dem beschriebenen Verfahren funktioniert zuverlässig, solange das Spiegelechosignal nur von einer Stelle der Erdoberfläche zur Antenne reflektiert wird. Bei mehrfacher oder diffuser Reflektion zur Empfangsantenne treten jedoch Fehler auf, die durch das beschriebene Verfahren nicht oder nur mangelhaft korrigiert werden.

Der vorliegenden Erfindung liegt daher die Aufgabe zugrunde, ein Verfahren zur Spiegeleffektkorrektur anzugeben, das bei mehrfacher oder diffuser Reflektion des Echosignals ein genaueres korrigiertes Höhenwin-kelfehlersignal ergibt.

2

EP 0 433 675 B1

Diese Aufgabe wird durch die im kennzeichnenden Teil des Patentanspruchs 1 angegebenen Massnahmen gelöst. Vorteilhafte Ausgestaltungen der Erfindung sind in weiteren Ansprüchen angegeben.

Das erfindungsgemässe Verfahren weist folgende Vorteile auf : Nach diesem Verfahren arbeitende Crossfeed-Radargeräte sind in der Lage, fliegende, insbesondere auch tieffliegende Objekte auf See bei verschiedenartigem Wellengang oder über Land bei verschiedenartiger Rauhigkeit der Erdoberfläche verfolgen zu können.

Die Erfindung wird nachfolgend anhand einer Zeichnung beispielsweise näher erläutert. Dabei zeigt:

Fig. 1    Die Wege der Echosignale vom Flugobjekt zur Antenne bei idealen Spiegelverhältnissen

Fig. 2    Die Wege der Echosignale vom Flugobjekt zur Antenne unter erschwerten Bedingungen

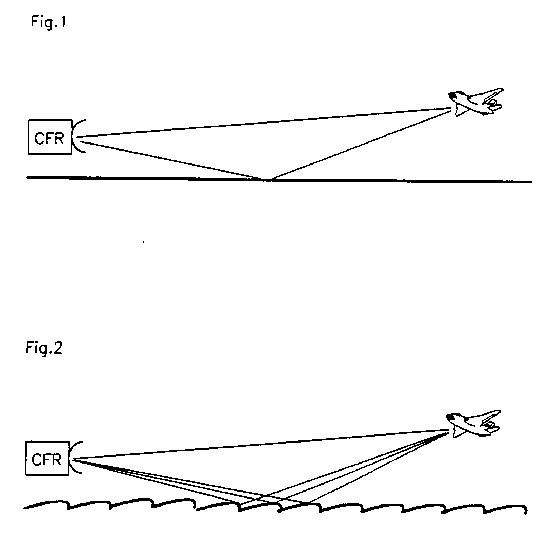

Fig. 1 zeigt ein tieffliegendes Objekt, das von einem Crossfeed-Radargerät (CFR) vermessen wird. Von der Radarantenne wird dabei nebst dem direkt reflektierten auch das an der Erdoberfläche gespiegelte Echosignal erfasst. Da die Spiegelung in diesem Falle an der glatten Erdoberfläche erfolgt, trifft nur ein einziges, nicht diffuses, gespiegeltes Echosignal bei der Antenne ein. Ein bekanntes nach dem Crossfeed-Verfahren arbeitendes Radargerät ist nun problemlos in der Lage, die genaue Elevation des Flugobjektes zu bestimmen.

In Fig.2 erfolgt die Spiegelung des Echosignals an einer rauhen Oberfläche. Die Bestimmung der Elevation des gezeigten Flugobjekts mit einem herkömmlichen Crossfeed-Radargerät ist nun nur mit beschränkter Genauigkeit möglich.

Die erfindungsgemässe Gewichtung der durch das Crossfeed-Verfahren ermittelten Korrekturglieder FD1 und FD2 mit Faktoren k1 bzw. k2, die von der Oberflächenrauhigkeit abhängig sind, erlaubt nun eine Verbesserung der Messgenauigkeit bzw. ein genaueres korrigiertes Höhenwinkelfehlersignals $F_{Ekorr}$ zu erzielen. Dabei wird das korrigierte Höhenwinkelfehlersignal $F_{Ekorr}$ wie folgt gebildet:

$$F_{Ekorr}(w_{dE}) = EEP + k1 \times FD1 + k2 \times FD2$$

Im Falle von Spiegelungen an einer Wasseroberfläche werden die Faktoren k1, k2 entsprechend der Wellenhöhe (wave height) bestimmt. Falls das Restkorrekturglied FD2 vernachlässigt wird, wird der Faktor k2 gleich Null gewählt. Andernfalls entspricht der Faktor k2 dem Wert des Faktors k1. Die den jeweiligen Wellenhöhen bzw. den in Merrill Skolnik, Radar Handbook,Mc Graw-Hill Inc. 1970, auf Seite 26-4 angegebenen Sea State Nummern entsprechenden Werte für den Faktor k1 sind wie folgt zu wählen: Für die Sea State Nummern 0,1 (calm, smooth) wird k1 nahe oder gleich 1 gewählt. Für die Sea State Nummern 6, 7, 8, 9 (high, very high,..) geht der Faktor k1 gegen Null. Eine Optimierung dieser Werte und die Wahl der Werte für k1 für die Sea State Nummern 2-5 erfolgt bei der Erprobung des Gerätes durch Vermessung eines Objektes mit bekannten Positionsdaten. Beispielsweise wird der Faktor k1 (k1< = 1; k1> = 0) für jede nächsthöhere Sea State Nummer um 5-10% reduziert.

Da ein direkter Zusammenhang zwischen der Wellenhöhe und der herrschenden Windgeschwindigkeit besteht, kann der Faktor k1 auch in Abhängigkeit von der Windgeschwindigkeit bestimmt werden. Die den jeweiligen Windgeschwindigkeiten bzw. den im vorgenannten Buch auf Seite 26-4 angegebenen Beaufort Nummern entsprechenden Werte für den Faktor k1 sind wie folgt zu wählen: Für die Beaufort Nummern 0,1 (calm, light air) wird k1 nahe oder gleich 1 gewählt. Für die Beaufort Nummern 9, 10, 11, 12 (strong gale, storm,..) geht der Faktor k1 gegen Null. Eine Optimierung dieser Werte und die Wahl der Werte für k1 für die Beaufort Nummern 2-8 erfolgt bei der Erprobung des Gerätes durch Vermessung eines Objektes mit bekannten Positionsdaten. Beispielsweise wird der Faktor k1 (k1< = 1; k1>=0) für jede nächsthöhere Sea State Nummer um 2,5-10% reduziert.

Für Crossfeed-Radargeräte (CFR), die Echosignale empfangen, welche an Oberflächen gespiegelt werden, die zumindest längerfristig eine unveränderliche Rauhigkeit (z.B. Äcker, Wiesen oder Wälder) aufweisen, erfolgt die Wahl der Werte für den Faktor k1 vorteilhafterweise bei der Erprobung des Gerätes durch Vermessung eines Objektes mit bekannten Positionsdaten. Vorteilhafterweise wird der günstigste Faktor k1 jeweils für verschiedene Sektoren von unterschiedlicher Rauhigkeit bestimmt.

**Patentansprüche**

1.    Verfahren zur Korrektur von Höhenwinkelfehlern in einem nach dem Crossfeed-Prinzip arbeitenden Radargerät (CFR), welches Echosignale von fliegenden Objekten direkt und, insbesondere bei tiefliegenden Objekten, indirekt bzw. an der Erdoberfläche gespiegelt, empfängt, **dadurch gekennzeichnet**, dass die ermittelten Korrekturglieder FD1, FD2 in Abhängigkeit von der Form und/oder Beschaffenheit der spiegelnden Oberfläche oder damit verbundenen Parameter mit Faktoren (k1, k2) gewichtet werden.

2.    Verfahren nach Anspruch 1, **dadurch gekennzeichnet**, dass der Faktor k2, falls das Restkorrekturglied FD2 vernachlässigt wird, gleich 0 und andernfalls entsprechend dem Wert des Faktors k1 gewählt wird.

3. Verfahren nach Anspruch 2, **dadurch gekennzeichnet**, dass der Faktor k1 im Falle von Spiegelungen an einer Wasseroberfläche in Abhängigkeit vom Wellengang gewählt wird.

4. Verfahren nach Anspruch 2, **dadurch gekennzeichnet**, dass der Faktor k1 im Falle von Spiegelungen an einer Wasseroberfläche in Abhängigkeit von der Windgeschwindigkeit gewählt wird.

5. Verfahren nach Anspruch 2, **dadurch gekennzeichnet**, dass der Faktor k1 im Falle von Spiegelungen an Oberflächen mit unveränderlicher Rauhigkeit durch Messung eines Objekts mit bekannter Elevation festgelegt wird.

6. Verfahren nach Anspruch 5, **dadurch gekennzeichnet**, dass der Faktor k1 für verschiedene Sektoren unterschiedlicher Rauhigkeit festgelegt wird.

## Claims

1. Process for the correction of errors in elevation angles in a radar device (CFR) operating in accordance with the crossfeed principle, which receives echo signals directly from flying objects and, in particular with low-flying objects, indirectly or reflected from the earth's surface, characterised in that the ascertained correction elements FD1, FD2 are evaluated in dependence on the shape and/or nature of the reflecting surface or parameters having factors k1, k2 connected with it.

2. Process according to claim 1, characterised in that if the residual correction element FD2 is disregarded, the factor k2 is equal to 0 and otherwise is selected in accordance with the value of the factor k1.

3. Process according to claim 2, characterised in that in the case of reflections on a water surface the factor k1 is selected in dependence on the waves.

4. Process according to claim 2, characterised in that in the case of reflections on a water surface the factor k1 is selected in dependence on the wind speed.

5. Process according to claim 2, characterised in that in the case of reflections on surfaces with constant roughness the factor k1 is determined by measuring an object with known elevation.

6. Process according to claim 5, characterised in that the factor k1 is determined for different sectors of varying roughness.

## Revendications

1. Procédé pour corriger des erreurs d'angle d'élévation dans un appareil radar (CFR) travaillant selon le principe Crossfeed, qui reçoit directement les signaux d'échos d'objets en vol et, notamment dans le cas d'objets peu élevés, indirectement ou par le biais d'une réflexion sur la surface de la terre, caractérisé par le fait que les éléments de correction déterminés FD1, FD2 sont pondérés en fonction de la forme et/ou de l'état de la surface réalisant la réflexion, ou de paramètres, qui y sont liés, par des facteurs k1, k2.

2. Procédé suivant la revendication 1, caractérisé par le fait que dans le cas où on néglige l'élément de correction résiduel FD2, le facteur k2 est égal à 0 et, sinon, est choisi en fonction de la valeur du facteur k1.

3. Procédé suivant la revendication 2, caractérisé par le fait que dans le cas de réflexions sur une surface d'eau, le facteur k1 est choisi en fonction de la houle.

4. Procédé suivant la revendication 2, caractérisé par le fait que dans le cas de réflexions sur une surface d'eau, le facteur k1 est choisi en fonction de la vitesse du vent.

5. Procédé suivant la revendication 2, caractérisé par le fait que dans le cas de réflexions sur des surfaces présentant une rugosité variable, le facteur k1 est fixé au moyen de la mesure d'un objet possédant une élévation connue.

6. Procédé suivant la revendication 5, caractérisé par le fait que le facteur k1 est fixé pour différents facteurs présentant des rugosités différentes.

Fig.1

Fig.2